# EUROPEAN PATENT APPLICATION

(11) **EP 1 271 329 A2**
(43) Date of publication of application: **02.01.2003**
(21) Application number: 02254423.3
(22) Date of filing: 25.06.2002
(51) Int. Cl.: G06F 13/28

(54) **Improvements in DMA controller systems**

(30) Priority: 29.06.2001 GB 0115907
(71) Applicant: Zarlink Semiconductor Limited, Swindon, Wiltshire SN2 2QW (GB)
(72) Inventor: Evered, Jonathon, Plymouth, PL2 1PS (GB); Fisher, Daniel, Plymouth, PL 3 5NU (GB); Aldridge, David, Tavistock (GB); Buckley, Matthew Charles, Tavistock, Devon, PL 19 8BN (GB); Walker, Anthony Mark, Plymouth, Devon PL6 6BB (GB); Worroll, Maison Lloyd, Oreston, Plymouth (GB); Watkins, Andrew, Mannamead, Plymouth PL3 5BP (GB)
(74) Representative: Asquith, Julian Peter

(57) **Abstract**

A system is provided for transferring data from a first network, which is packet based, to a second network, the system comprising:
a physical layer input device, an input FIFO, a DMA controller for transferring data between addresses, an output FIFO, and a physical layer output device,
wherein the physical layer input device places beginning and end markers around packets in the input FIFO, and the DMA controller monitors the data which it transfers, and transfers data between said beginning and end markers, and ceases a transfer when an end of packet marker is reached.

## Description

The invention relates to systems for transferring data between two different networks, and particularly, but not exclusively, between two networks which are physically different.

Some background to the invention will first be discussed.

In many large scale networks there exists the need to transfer data between physically different networks such as packet-based networks and Time Division Multiplexed (TDM) based networks. This need exists for example when trying to build an IP network that carries telephone calls (VOIP -Voice over Internet Protocol networks). This can be done with a bridging device that converts packets into TDM data.

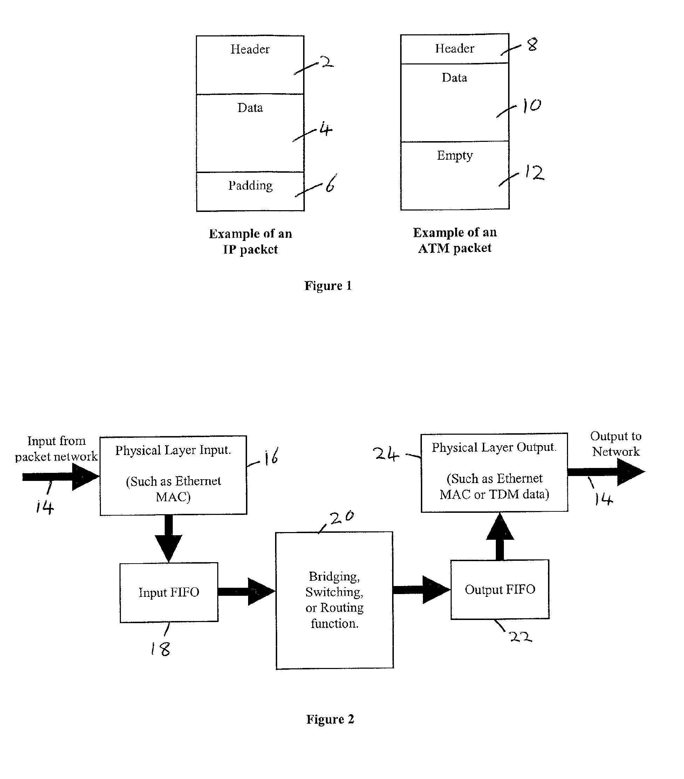

Often in a system that performs a bridging function such as connecting an IP network to a TDM network a large part of the packet contains redundant information. Examples of this are shown in Figure 1. An IP packet being transmitted over Ethernet contains the Ethernet header, the IP header, and possibly more layers of protocol on top, such as UDP (User Datagram Protocol) or RTP (Real Time Protocol). In addition there may also be padding (empty words) at the end of the packet.

The destination of the packet can be determined relatively easily by comparing the Ethernet address with the Ethernet address of the chip or with a set of addresses in a routing table etc. Armed with this information a simple decision of whether to process the packet or discard it can be made. If the packet is to be processed it must be stored in a temporary FIFO until it is processed. The packet can then be processed before it is stored in an output FIFO where it will wait until it is transmitted on its way. Figure 2 shows a high level architectural diagram of a system on chip design that could perform a switching, bridging or routing function.

Referring to Figure 2, Packets are received into the system from the packet network. In this application the input network will always be a packet-based network. The physical layer input device converts the packets from whichever form they took in transit and puts them into a FIFO. The physical layer input device could be an Ethernet Media Access Controller (MAC) for example if the input network was an IP network running over Ethernet.

At this stage a comparison of the destination address can be made to discard any packets not intended for processing by the system. Each packet will then be processed by the system in turn before it is transferred into an output FIFO. Packets are then taken from the output FIFO sequentially and transmitted onto the output network. The output network could be any type of network, for example a packet-based network such as an IP network or an ATM network, or a TDM network.

An efficient method of moving the packets from the input FIFO is to use a DMA controller under the control of a processor. However there are some problems with using a conventional DMA controller architecture. Firstly, the packets in the input FIFO maybe of variable size, and may contain redundant data at the end of the packet (padding). This means that the processor would have to read the header of the packet and calculate how many words to transfer from the FIFO. This requires additional processor overhead. Secondly, in order to reach the next packet in the FIFO, all of the current packet must be read from the FIFO, despite the fact that some of the data being read is redundant. This may require two or more separate transfer operations by the DMA controller, one to transfer valid data into the output FIFO, and others to discard redundant data.

The invention seeks to overcome at least some of the disadvantages of the prior art.

According to the invention there is provided a system for transferring data between first and second networks, as set out in the accompanying claims.

A novel architecture is provided, whereby the DMA controller takes advantage of begin and end markers placed around the packets in the input FIFO by the Physical Layer Input. The DMA controller can also be capable of automatically interrogating the header and discarding some of the redundant data.

A conventional DMA controller usually contains 3 configuration registers:
- Source address register.
- Destination address register.
- Transfer size register.

The DMA controller of the present invention is able to monitor the data as it transfers data from the source address to the destination address. The DMA controller continues transferring data until it reaches an end of packet marker, whereupon it can immediately cease the transfer. In order to avoid the possibility of never finding an end of packet marker, the DMA controller also monitors the data for start of packet markers. In addition, the DMA controller may also be given a maximum transfer size such that any packet in the input FIFO could not be larger in size than this maximum. This avoids the possibility of the DMA controller getting stuck in a loop that causes the DMA controller to transfer data forever.

The DMA controller may be able to read words from the header in order to calculate the header size and the data size. Armed with this information the DMA controller can calculate the number of words to transfer as the header, the number of words to transfer as the data, and the number of redundant empty words to discard at the end of the packet. The header size may be variable as with an IP packet, or fixed and constant as with an ATM packet.

It may be possible to discard some or all of the header because the packet has reached the destination address specified in the header, and any other checking such as checksum verification has already been done as the packet was written into the input FIFO.

The DMA controller can automatically search through the FIFO until a beginning of packet marker is found. Then, it could read each word of header data, and calculate the size of the header (if necessary) and the size of the data. Then the header can be discarded or transferred to a fixed position in a local area of memory for processing by the processor, and the data can be transferred to the output FIFO. Any remaining words at the end of the packet can be discarded automatically until; an end of packet marker is reached, a start of packet marker is reached, or the maximum transfer size is reached.

A clear advantage of this approach is that it removes the processing overhead from the processor used to calculate the size of the data and/or header, and divide the transfer up.

An embodiment of the invention will now be described, by way of example only, with reference to the accompanying drawings, in which:
Figure 1 shows an example of an IP packet and an ATM packet;
Figure 2 shows a high level architecture diagram of a system on chip design that could perform a switching, bridging or routing function; and
Figure 3 shows a microprocessor controlled DMA controller which can be used in a system that bridges a TDM network and an IP network.

Figures 1 and 2 have been referred to above. Figure 1 shows an example of an IP packet, which contains a header 2, data 4 and padding 6, and also an example of an ATM packet which contains a header 8, data 10 and empty space 12.

Figure 2 shows a known architecture for transferring data between physically different input and output networks. The flow of data is indicated by arrows 14. The data passes through a physical input layer device 16, an input FIFO 18, a bridging, switching or routing function 20, and output FIFO 22, and a physical layer output device 24.

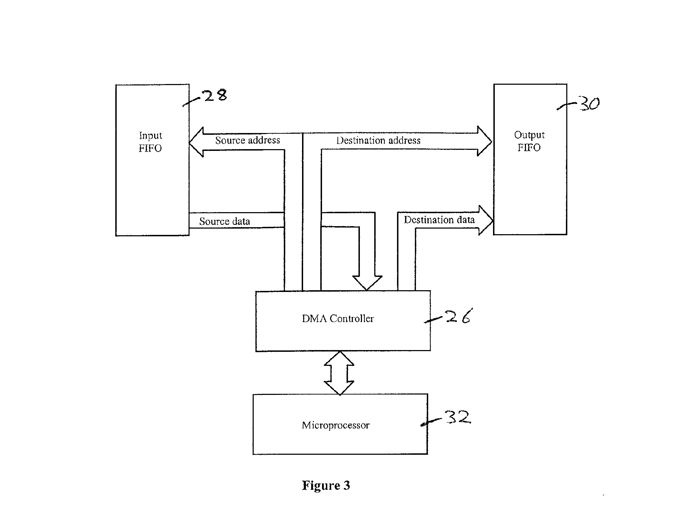

Figure 3 shows an example of a system that could be used for converting between an IP network and a TDM network. The system can receive IP packets and convert them into TDM data, and can also take TDM data and convert it into IP packets. The primary use of such a system would be in the building of Voice over IP (VoIP) networks. Only the part of the system concerned with converting IP packets into TDM data is illustrated here.

A diagram of a system comprising a microprocessor controlled DMA controller 26 is shown in Figure 3. The system also comprises an input FIFO 28, output FIFO 30, and microprocessor 32. The input and output FIFOs 28 and 30 are connected to physical layer input and output devices (not shown) respectively. This architecture could be used to create a system that bridges a TDM network and an IP network. The beginning and end of packet markers bound all packets in the input FIFO 28, and are added by the physical layer input device. The input network is an IP network running over Ethernet. The destination addresses in the Ethernet header and the IP header both refer to which channel of TDM data that the data in the packet will be routed to. Each channel of TDM data has its own unique circular buffer in the output FIFO 30. Depending on what the IP destination address is, the data from the packet being processed will be transferred into the appropriate circular buffer in the output FIFO 30.

In this context the term "channel of TDM data" refers to a single Time Division Multiplexed (TDM) circuit within a TDM stream (GCI and ST-BUS are two popular methods for defining the format of TDM streams). The TDM channel is the basic building block of any TDM system, and in a telephone system for example a TDM channel would carry a single voice channel.

The term "circular buffer" as used here refers to a method for writing data to and reading data from a block of memory. Data is written to or read from consecutive addresses within the circular buffer (which need not necessarily be consecutive addresses within the memory in which the circular buffer exists) until the limits of the buffer are reached. Once the upper or lower boundary of the circular buffer is reached the next read or write will be from or to the circular buffer address that is furthest from the current address.

As packets are received from the Ethernet network, the input data is monitored by the physical layer input device, and information such as the IP destination address is extracted. At the same time, the checksums are verified. The information such as the destination address is used to calculate which channel the data in the packet is intended for. This channel information is inserted into the beginning of packet marker by the physical layer input device. If the packet contains errors such as one of the checksum verifications fail, or the header of the packet is not recognisable, a flag is set in the beginning of packet marker to indicate the packet must be discarded.

As the DMA controller 26 is able to monitor the beginning of packet markers and the end of packet markers, the DMA controller 26 is able to extract the information from the start of packet marker. It uses this information to calculate the length of the header, and the length of the data in the packet. Since the useful information from the header has been extracted by the physical layer input device as the packet was transferred into the input FIFO 28, the header can be discarded. The information in the start of packet marker is used to calculate the destination of the data in the packet. The DMA controller 26 then transfers the number of data words in the packet to the correct circular buffer in the output FIFO 30, and discards all of the remaining words in the packet until the end of packet marker is found in the input FIFO 28. The start of packet marker also contains information as to whether the packet contains errors, if this is the case the DMA controller 26 can automatically discard the entire packet.

## Claims

1. A system for transferring data from a first network, which is packet based, to a second network, the system comprising:
a physical layer input device, an input FIFO, a DMA controller for transferring data between addresses, an output FIFO, and a physical layer output device,
wherein the physical layer input device places beginning and end markers around packets in the input FIFO, and the DMA controller monitors the data which it transfers, and transfers data between said beginning and end markers, and ceases a transfer when an end of packet marker is reached.

2. A system as claimed in claim 1, wherein the DMA controller ceases the transfer when a maximum packet transfer size is reached.

3. A system as claimed in any preceding claim, wherein the DMA controller is arranged to read words from the headers of packets, to use these to calculate the header and data sizes, and to discard any redundant words at the end of the packets.

4. A system as claimed in claim 3, wherein the DMA controller is arranged to discard some or all of the packet header where appropriate.

5. A system as claimed in any preceding claim, wherein the DMA controller is controlled by a microprocessor.

6. A system as claimed in any preceding claim, wherein said first network is an IP network and said second network is a TDM network.

7. A system as claimed in claim 6, wherein each channel of TDM data has its own unique circular buffer in the output FIFO.

8. A system as claimed in claim 6 or 7, wherein the physical layer input device extracts the IP destination address of packets received from said first network, and uses these addresses to insert channel information into said beginning of packet markers.

9. A system as claimed in claim 8, wherein the DMA controller extracts said channel information from said beginning of packet markers.

10. A system as claimed in any preceding claim, which is also arranged to transfer data from said second network to said first network.
